# EUROPÄISCHE PATENTSCHRIFT

(11) **EP 4 078 448 B1**
(45) Veröffentlichungstag und Bekanntmachung des Hinweises auf die Patenterteilung: **23.07.2025**
(21) Anmeldenummer: 20829867.9
(22) Anmeldetag: 15.12.2020
(51) Int. Cl.: G06V 10/82, G06V 20/10, A01G 2/10, G06F 18/2413, G06N 3/045, G06N 3/08

(54) **VERFAHREN ZUM RECHNERGESTÜTZTEN LERNEN EINES KÜNSTLICHEN NEURONALEN NETZWERKES ZUR ERKENNUNG VON STRUKTURELLEN MERKMALEN VON OBJEKTEN**
METHOD FOR THE COMPUTER-ASSISTED LEARNING OF AN ARTIFICIAL NEURAL NETWORK FOR DETECTING STRUCTURAL FEATURES OF OBJECTS
PROCÉDÉ D'APPRENTISSAGE ASSISTÉ PAR ORDINATEUR DE RÉSEAU NEURONAL ARTIFICIEL POUR LA DÉTECTION DE CARACTÉRISTIQUES STRUCTURELLES D'OBJETS

(30) Priorität: 19.12.2019 DE 102019008881; 11.02.2020 DE 102020000863
(43) Veröffentlichungstag der Anmeldung: 26.10.2022
(73) Patentinhaber: RoBoTec PTC GmbH, 28357 Bremen (DE)
(72) Erfinder: VON RUNDSTEDT, Friederike, 28357 Bremen (DE); VON RUNDSTEDT, Stephan, 28357 Bremen (DE); LEU, Adrian, 28279 Bremen (DE)
(74) Vertreter: Hoener, Matthias
(86) Internationale Anmeldenummer: PCT/EP2020/086251
(87) Internationale Veröffentlichungsnummer: WO 2021/122616

(56) Entgegenhaltungen:
- EP-A1- 3 537 342
- WO-A1-2018/024369
- WO-A1-2019/162241
- US-A1- 2018 220 589
- POIER GEORG ET AL: "Learning Pose Specific Representations by Predicting Different Views", 2018 IEEE/CVF CONFERENCE ON COMPUTER VISION AND PATTERN RECOGNITION, IEEE, 18 June 2018 (2018-06-18), pages 60 - 69, XP033475965, DOI: 10.1109/CVPR.2018.00014
- HONGHUA DONG ET AL: "Neural Logic Machines", ARXIV.ORG, CORNELL UNIVERSITY LIBRARY, 201 OLIN LIBRARY CORNELL UNIVERSITY ITHACA, NY 14853, 26 April 2019 (2019-04-26), XP081174059
- HUANG XIANG ET AL: "Multi-view Fusion with Deep Learning for 3D Shape Classification", 2018 INTERNATIONAL CONFERENCE ON AUDIO, LANGUAGE AND IMAGE PROCESSING (ICALIP), IEEE, 16 July 2018 (2018-07-16), pages 189 - 194, XP033398410, DOI: 10.1109/ICALIP.2018.8455827

## Beschreibung

Die Erfindung betrifft ein Verfahren zum rechnergestützten Lernen eines künstlichen neuronalen Netzwerkes zur Erkennung von geeigneten Schnittpositionen zur Klonierung einer Pflanze gemäß dem Anspruch 1. Des Weiteren betrifft die Erfindung ein künstliches neuronales Netzwerk gemäß dem Anspruch 16.

In der Automatisierungstechnik, der Robotik, für das autonome Fahren, generell zur Muster- bzw. Personenerkennung usw., werden für eine voll- oder teilautomatisierte Steuerung Systeme eingesetzt, die auf künstlichen Intelligenzen (Kl) bzw. auf künstlichen neuronalen Netzwerken (KNN) basieren. Diese Kl-Systeme bzw. KNN basieren auf trainierten Daten und sollen wenigstens im teilautonomen Betrieb beispielsweise eines Roboters eine Umwelt des Roboters bei der Steuerung berücksichtigen. Dazu werden für auftretende Ereignisse bzw. Situationen in der Umwelt des Roboters geeignete Reaktionen eingeleitet. Bezogen auf das prominente Beispiel des autonomen Fahrens ist z.B. ein Fahrzeug so zu steuern, dass Kollisionen mit Hindernissen und/oder anderen Verkehrsteilnehmern verhindert werden oder dass das Fahrzeug dem Fahrbahnverlauf folgt. Dieses KNN wird mit Trainingsdatensätzen trainiert, um dem Kl-System nach und nach das verkehrssichere autonome Fahren beizubringen.

Aufgrund der hohen Komplexität der Erkennungsvorgänge der Umwelt bietet sich nicht nur im Zusammenhang mit dem autonomen Fahren von Fahrzeugen die Verwendung von KNN an. Das KNN führt beispielsweise anhand von mit einer Kamera eines (beliebigen) Objektes aufgenommenen Bilddaten eine Klassifizierung der in den Bilddaten erkennbaren Objekte oder strukturellen Merkmale durch. Dadurch können die Objekte automatisch identifiziert werden.

Die Patentanmeldung US 2018/220589 A1 offenbart ein Verfahren, bei dem geeignete Schnittpositionen für das Beschneiden, Ernten, Besprühen und/oder Pflegen von Pflanzen mittels eines künstlichen neuronalen Netzwerks ermittelt werden.

Neben dem autonomen Fahren oder der Personen- oder Spracherkennung stellt die Vollautomatisierung von komplexen Produktionsverfahren ein weiteres Anwendungsgebiet für KI-System dar. Beispielsweise ist es bekannt, dass Zier- sowie Nutzpflanzen nahezu vollautomatisiert vermehrt bzw. vervielfältigt werden können. Bedingt durch die in den letzten Jahren stetig steigende Nachfrage an Zier- sowie Nutzpflanzen wurde der gesamte Prozess des Vermehrens industrialisiert. Diese Industrialisierung der Pflanzenvermehrung umfasst ein automatisiertes Trennen eines Pflanzenbestandteils (Klon) von einer Mutterpflanze sowie ein automatisiertes Zuführen des abgetrennten Pflanzenbestandteils zu einem Nährmedium. Bei diesem vegetativen Vermehrungsverfahren bzw. Klonen von Pflanzen kann nahezu vollständig auf den Einsatz von kostenintensivem Personal verzichtet werden.

Als besonders schwierig und somit kritisch bei der Vollautomatisierung der Pflanzenvermehrung hat sich das Erkennen einer geeigneten Schnittposition an der Mutterpflanze sowie das Abtrennen bzw. Schneiden an der Pflanze erwiesen. Der Erfolg der Vermehrung bzw. die Vermehrungs- oder Wachstumsrate des abgetrennten Pflanzenbestandteils bzw. eines Klons hängt entscheidend davon ab, an welcher Position an der Mutterpflanze der Schnitt erfolgt. Jede Pflanze besitzt Bereiche, die nach einem Schnitt besonders bevorzugt weiterwachsen bzw. an denen sich besonders bevorzugt Wurzeln bilden. Neben den unterschiedlich gut geeigneten Bereichen bzw. Teilen einer Pflanze für eine Teilung bzw. Klonierung variieren diese Bereiche von Pflanze zu Pflanze bzw. von Art zu Art. Bereiche bspw. an einer Orchidee, die sich besonders gut eignen für einen Trennschnitt, können weniger geeignet sein für einen entsprechenden Schnitt an einer Hanfpflanze. Daher ist es nicht nur für jede einzelne Pflanze entscheidend, einen optimalen Schnittbereich zu erkennen, sondern auch für unterschiedliche zur Vermehrung vorgesehene Pflanzenarten.

Dieses pflanzenindividuelle sowie pflanzenartspezifische Erkennen von bevorzugten Schnittbereichen stellt die industrialisierte Pflanzenvermehrung vor ein großes Problem. Während es für geschultes Personal kein Problem darstellt, für jede spezifische Pflanze einen optimalen Schnittbereich auszuwählen, ist diese Auswahl eines bevorzugten Schnittbereichs mit bekannten Bilderkennungseinrichtungen unmöglich. Auch bekannte KI-Systeme bzw. KNN liefern für die Erkennung von strukturellen Merkmalen an individuellen Objekten, wie Pflanzen, keine zuverlässigen Resultate, die geeignet sind, Pflanzen gezielt zu zerschneiden. Insbesondere beim Anlernen eines KNN zur Bilderkennung werden bei bekannten Verfahren strukturelle Details von Objekten ausgeblendet. Wenn es jedoch bei der Objekt-Klassifizierung oder der Merkmalserkennung gerade auf diese Details ankommt, erweisen sich die bekannten KNN als ungeeignet.

Der Erfindung liegt daher die Aufgabe zugrunde, ein Verfahren zum rechnergestützten Lernen eines künstlichen neuronalen Netzwerkes zur Erkennung von strukturellen Merkmalen an Objekten sowie ein künstliches neuronales Netzwerk zu schaffen, durch welches ausgewiesene strukturelle Merkmale an Objekten schnell und zuverlässig erkennbar sind.

Eine Lösung dieser Aufgabe wird durch die Maßnahmen des Anspruchs 1 beschrieben. Demnach ist es vorgesehen, dass zum Anlernen eines künstlichen neuronalen Netzwerkes zur Merkmalserkennung an Objekten ein *convolutional* neuronales Netzwerk (CNN), insbesondere ein regionales *convolutional* neuronales Netzwerk (R-CNN), mit einer Vielzahl von Neuronen verwendet wird. Dieses Netzwerk weist eine Vielzahl von *convolutional* und/oder *pooling* Schichten (*layers*) auf zur Extraktion von Informationen aus Bildern von einzelnen Objekten. Dies dient der Erkennung der strukturellen Merkmale an den Objekten für eine Klassifikation der Merkmale durch weitere Schichten des Netzwerkes. Die Bilder der Objekte werden dabei jeweils von Schicht zu Schicht des KNN skaliert bzw. hoch- und/oder runterskaliert. Bei der Skalierung der Bilder von Schicht zu Schicht bleiben Informationen über die strukturellen Merkmale der Objekte erhalten und zwar unabhängig von der Skalierung der Bilder. Das Skalieren durch eine bekannte bilineare Interpolation führt immer zu einem Unschärfeeffekt, da Intensitäten von Pixeln der Bilder als gewichtete Summe benachbarter Pixel berechnet werden und somit Details bzw. feinere Strukturen verloren gehen. Der Vorteil des hier beschriebenen Verfahrens gegenüber der sogenannten *Nearest Neighbour Interpolation* (bilineare Interpolation) besteht nun gerade darin, dass in einem verkleinerten Bild zunächst einmal überhaupt feinere Strukturen vorhanden sind, auch wenn deren Pixelintensität oft erheblich reduziert ist.

Um zu lernen, wie ein möglicher Schnitt durch eine Pflanze, insbesondere durch ein Meristem einer Pflanze oder durch einen anderen Pflanzenbestandteil, aussieht, muss das KNN wissen, welche Pixel zu dem möglichen Schnitt gehören. Dies wird bestimmt, indem jedes Pixel eines Schnitts während eines *Labelings* als weißes Pixel markiert wird. Wenn diese weißen Pixel bzw. diese Pixelintensität während der erforderlichen Skalierungsschritte im Lernprozess abgedunkelt oder gelöscht werden, lernt die KNN genau dies, was sich negativ auf das Ergebnisse auswirkt.

Um dieses Problem zu beheben, werden erfindungsgemäß anstelle der Pixelintensitäten Bildinformationen bzw. -koordinaten des Bildes des Objektes der relevanten Punkte bzw. Merkmale eines möglichen Schnittmusters bzw. einer Schnittkurve gespeichert und während der Skalierung auf die neue Bildgröße skaliert. Anschließend wird die Schnittkurve auf dem neu skalierten Bild gezeichnet, sodass jede Pixelintensität jedes Kurvenpixels weiß ist, so wie es sein sollte. Dadurch kann das KNN alle Details der Schnittkurve bzw. die strukturellen Merkmale lernen.

Außerdem werden erfindungsgemäß mehrere, insbesondere 2, 3, 4, 5 oder 6, Bilder aus verschiedenen Perspektiven des gleichen Objektes zur Erkennung der strukturellen Merkmale bzw. der Schnittkurve erstellt und gleichzeitig an das KNN übergeben, wobei rechnergestützte Operationen zur Erkennung der strukturellen Merkmale des Objektes auf den Bildern parallel auf mehreren GPUs durchgeführt werden. Dadurch wird, im Vergleich zu der Bearbeitung der einzelnen Bilder, eine sehr schnelle Erkennung der Merkmale möglich. Zur Aufnahme des Objektes aus verschiedenen Perspektiven stehen mehrere Kameras zur Verfügung. Diese, insbesondere 2, 3, 4, 5 oder 6, Kameras sind um das Objekt, vorzugsweise die Pflanze, angeordnet bzw. wird das Objekt den Kameras zugeführt. Die Kameras werden in einer vordefinierten Reihenfolge hardwaremäßig ausgelöst, um eine optimale Bildqualität in Bezug auf die Bildbelichtung und die Abwesenheit einer Überblendung durch die Lichter vor einer Kamera zu gewährleisten. Die Kameras befinden sich an den Ecken eines Vielecks, insbesondere eines Sechsecks, und bilden das Objekt in Schritten von bspw. 60 Grad ab. Wenn weitere Schritte oder eine andere Schrittweite erforderlich sind, kann ein Roboterarm das Objekt um 30 Grad bzw. die geeigneten Grad, drehen und den Bildgebungsprozess erneut starten. Danach können bspw. 12 Bilder in 30-Grad-Schritten zur Verfügung stehen. Dieser Vorgang kann wiederholt werden, bis der gewünschte Schritt erreicht ist (18 Bilder in 20-Grad-Schritten, 36 Bilder in 10-Grad-Schritten usw.).

Das KI-System bzw. das KNN muss alle von einem Objekt aufgenommenen Bilder auswerten, um den besten Winkel zu ermitteln (bei Pflanzen den für das Schneiden am besten geeigneten Winkel bzw. Ausrichtung zwischen dem Objekt und dem Schneidmittel). Es kann auch mehr als ein geeigneter Winkel existieren. Wenn die Bilder einzeln an das KNN übergeben werden, dauert der Vorgang sehr lange, da das KNN nach jedem Bild neu initialisiert werden muss. Wenn stattdessen 6 oder mehr Bilder zusammengefügt und gleichzeitig präsentiert werden, verringert sich die Verarbeitungszeit fast um den Faktor der präsentierten Bilder (6-mal schneller für 6 Bilder usw.). Dies ist natürlich nur möglich, solange die skalierten bzw. verkleinerten und zusammengefügten Bilder noch genügend Informationen enthalten, damit das KNN eine gute Leistung erzielen kann. Insbesondere sieht es die Erfindung weiter vor, dass die mehreren Bilder des gleichen Objektes vor der Übergabe an das neuronale Netzwerk skaliert, insbesondere *reskaliert,* und *gestitched* werden.

Weiter kann es erfindungsgemäß vorgesehen sein, dass ein *Labeling,* bzw. eine Benennung, Markierung, Etikettierung, der Merkmale der Objekte auf den Bildern in Vorbereitung auf den Lernprozess des KNN halbautomatisch durchgeführt wird, wobei vorzugsweise zunächst eine Isolierung der Merkmale und/oder der Objekte von einem Hintergrund der Bilder erfolgt und insbesondere darauffolgend ein *Labeling* der Merkmale durch eine Person. Dies minimiert die notwendige personengebundene Interaktion und führt daher zu einem schnelleren und genaueren *Labeling* bzw. Etikettierung. Dieser Schritt ist entscheidend dafür, dass das KI-System lernen kann, wie neue Objekte zu verarbeiten sind.

Üblicherweise erfordert es die Bildkennzeichnung, dass die Person, die das *Labeling* bzw. das Etikettieren durchführt, die interessierenden Objekte genau kennzeichnet, um diese von anderen Objekten und vom Hintergrund zu trennen. Dieser Vorgang ist sehr zeitaufwendig und erfordert ein hohes Maß an Aufmerksamkeit. Um diesen Prozess zu verbessern bzw. zu beschleunigen, werden die Objekte von dem KNN durch eine Farbsegmentierung voneinander und vom Hintergrund getrennt. Beim Zerschneiden der Pflanze muss die etikettierende Person lediglich die Schnitte platzieren. Daraufhin werden alle anderen Konturen des Objektes bzw. der Pflanze automatisch erkannt bzw. extrahiert. Das gleiche Verfahren wird auch verwendet, um die etikettierende bzw. *labelnde* Person beim *Labeln* von Pflanzen auf dem Förderband zu unterstützen. Die Pflanzenkontur wird automatisch extrahiert und der Etikettierer muss nur den Punkt markieren, an dem der Roboter die Pflanze und die Ausrichtung der Pflanze erfassen soll. Dadurch lässt sich der gesamte Lernprozess des KNN erheblich beschleunigen.

Weiter kann es vorgesehen sein, dass ein *Labeling* der Merkmale der Objekte rechnergestützt vorgeschlagen wird und/oder dass vor dem *Labeling* die verwendeten Bilder vorsortiert werden, wobei nur Bilder für das *Labeling* verwendet werden, deren Objekte und/oder Merkmale der Objekte sich von Objekten und/oder Merkmalen der Objekte anderer Bilder unterscheiden.

Ein weiteres Ausführungsbeispiel kann es vorsehen, dass die Bilder nach dem *Labeling* gruppiert werden in Gruppen von Bildern mit Objekten die wenige strukturelle Merkmale, viele strukturelle Merkmale und/oder komplexe strukturelle Merkmale aufweisen. Um dies zu erreichen, wird das KNN so trainiert, dass es die Ähnlichkeit zwischen Bildern misst und somit bestimmen kann, wie wahrscheinlich es ist, dass zwei verschiedene Bilder von demselben Objekt und/oder aus derselben Perspektive aus aufgenommen wurden. Dieses Ähnlichkeitsmaß kann verwendet werden, um zu bestimmen, ob beide Bilder beschriftet (*gelabelt*) werden sollen, wenn sie dem KNN neue Informationen hinzufügen, oder ob eines von ihnen ausreicht, da die Verwendung des zweiten Bildes keine wesentlichen neuen Informationen bringen würde.

Das KNN wird auch darauf trainiert, die Komplexität eines Objektes bzw. einer Objektklasse zu bestimmen, indem Ähnlichkeiten verschiedener Objekte derselben Klasse bzw. Art oder Gattung ermittelt werden. Einfachere Objekte, d.h. Objekte mit wenigen strukturellen Details, weisen eine höhere Ähnlichkeit zwischen verschiedenen Instanzen auf. Komplexere Objekte hingegen weisen eine geringere Ähnlichkeit auf. Basierend auf dieser Ähnlichkeitsmessung kann geschätzt werden, wie viele verschiedene Bilder von Objekten einer bestimmten Klasse beschriftet und zum Trainieren des KNN verwendet werden müssen.

Bevorzugt ist es weiter vorgesehen, dass für das Lernen des KNN die Bilder mit den Objekten, deren Merkmale zu erkennen sind, nur einigen Schichten, insbesondere den oberen Schichten, zugeführt werden und nur die Gewichtungen dieser Schichten angepasst werden, wobei die übrigen, fixierten, Schichten für den Lernprozess des Netzwerkes nicht angepasst werden, insbesondere deren Gewichtungen für alle Bilder unverändert bleiben. Um den Trainingsprozess zu beschleunigen, kann die Ausgabe dieser fixierten Schichten vorberechnet und zwischengespeichert werden. Während des Trainings werden diese zwischengespeicherten Werte dann für jedes Bild verwendet, anstatt sie immer wieder neu zu berechnen. Das Lesen eines zwischengespeicherten Wertes ist mindestens 10- bis 100-mal schneller als das Neuberechnen der Werte, was zu einer erheblichen Beschleunigung des Lernprozesses führt.

Die einzelnen Verfahrensschritte, die in einem KNN durchgeführt werden, können als eine Reihe von mathematischen Operationen angesehen werden, die anschließend auf die Eingabedaten angewendet werden. Jede Schicht stellt eine andere Operation dar, die auf die Eingabedaten dieser Schicht angewendet wird. Angenommen die Eingabedaten heißen i. Das beispielhafte KNN weist fünf Schichten auf, die als I1, I2, I3, I4 und I5 bezeichnet werden. Die Verarbeitung läuft wie folgt ab: I1 wendet seine Operation bzw. Transformation auf i an und erzeugt die Ausgabe o1 = I1 (i). Auf die gleiche Weise ergibt sich o2 = I2 (o1), wenn die zweite Schicht auf die Ausgabe von Schicht 1 angewendet wird. Ähnliches gilt für I3, I4 und I5. Wenn I1, I2 und I3 nicht angelernt werden, ist o3 für i immer gleich, egal wie oft es berechnet wird. Wenn I4 und I5 trainiert werden, ändert sich ihre Ausgabe während des Trainingsprozesses, so dass o4 und o5 nach jeder Iteration des Lernprozesses unterschiedlich sind. Anstatt jedoch jedes Mal o1, o2 und o3 für die Eingabe i zu berechnen, kann man o3 speichern und jedes Mal verwenden, wenn i als Eingabe verwendet wird. Daher wird für jeden Eingang ik und Ausgang o3 k gespeichert und an I4 übergeben. Auf diese Weise wird die Verarbeitungszeit für die ersten drei Schichten eingespart, da das Laden der Ausgabe der Schicht 3 erheblich schneller ist als das Berechnen der Ausgabe der ersten drei Schichten. Die Beschleunigung ist umso größer, je mehr Schichten ein Netzwerk hat und je weniger Daten am Ausgang der letzten festen Schicht vorhanden sind.

Ein besonders bevorzugtes Ausführungsbeispiel der Erfindung kann es vorsehen, dass für den Lernprozess nur die Gewichtungen der oberen Schichten angepasst werden und die übrigen Schichten für den Lernprozess nicht angepasst werden, wobei insbesondere die Gewichtungen der oberen Schichten für jedes Bild angepasst werden und für die übrigen Schichten die Wichtungen für alle Bilder nicht angepasst werden.

Insbesondere ist es außerdem denkbar, dass die einzelnen Verfahrensschritte parallel auf mehreren Rechnereinheiten gleichzeitig durchgeführt werden, wobei die notwendigen Operationen derart auf alle Rechnereinheiten verteilt werden, dass eine optimale Ausnutzung der Rechnerkapazität erzielt wird. Außerdem ist die Softwarearchitektur in Form einer Pipeline entwickelt: Alle Einheiten können parallel laufen und sind miteinander durch die Verwendung von Puffern verbunden, mit denen die Ausgaben an die nächste Station in der Pipeline übertragen werden. Im Gegensatz zur sequentiellen Verarbeitung, bei der die Zykluszeit durch die Summe aller Rechnereinheiten gegeben ist, ist die Zykluszeit für die Pipeline-Verarbeitung unabhängig von der Anzahl der Rechnereinheit und wird von der langsamsten Rechnereinheit einschließlich Lesen / Schreiben des Puffers gegeben. Die Verarbeitungspipeline für die Hardware und die Software der verwendeten Vorrichtung ist ähnlich konzipiert, wie die eines traditionellen Fließbands. Bei dem Anwendungsbeispiel der Vermehrung von Pflanzen, insbesondere eines Meristems einer Pflanze oder eines anderen Pflanzenbestandteils, sind diesem Fließband bzw. der Vorrichtung mehrere Stationen zugeordnet. Eine erste Station entnimmt eine Pflanze aus einem Becher. In einer zweiten Station werden von der Pflanze Bilder von allen Seiten erstellt. In der dritten Station wird die Pflanze zerschnitten. In der vierten Station wird die Pflanze auf dem Förderband geprüft. Dort wird festgestellt, ob weitere Schnitte notwendig sind. In der fünften Station wird die Pflanze auf dem Förderband erkannt und ergriffen, um den abgeschnitten Teil der Pflanze in einen neuen Becher zu stecken. Eine sechste Station bestimmt eine optimale Raumnutzung durch die Pflanzen in den Ausgabebechern.

Eine derartige "Pipeline" kann nur dann effizient arbeiten, wenn alle ihre Komponenten voneinander unabhängig und parallel arbeiten können. Um dies zu erreichen, wird sowohl der Prozess als auch die Berechnung parallelisiert. Der Prozess wird parallelisiert, indem zwei Roboterarme die ersten drei Stationen bedienen. Ein dritter Arm wird für die letzten beiden Stationen verwendet. Alle Bildverarbeitungsmodule werden auch parallel bedient, indem die Rechenlast auf mehrere Computer verteilt wird.

Weiter ist es denkbar, dass das *Labeling* an einem 3-dimensionalen Bild bzw. Objekt durchgeführt wird, wobei das 3-dimensionale Bild bzw. Objekt auf zwei Dimensionen projiziert und dem neuronalen Netzwerk zum Lernen zugeführt wird und anschließend zurück in ein 3-dimensionales Bild bzw. Objekt umgewandelt wird. Es ist vorgesehen, die weitere Dimension in das neuronale Netzwerk einzubinden, indem wiederkehrende neuronale Netze verwendet werden, die Bildserien als Teil einer Sequenz behandeln. Auf diese Weise entstehen aus Einzelansichten Informationen, die an die anderen Perspektiven weitergegeben werden können, um eine vollständige Auswertung eines 3D-Bildes des Objektes bzw. der Pflanze zu erhalten. Die Beschriftung (*Labeling*) erfolgt dabei auf einem 3D-Modell des Objektes. Später wird diese Beschriftung/Modell auf 2D-Bilder zurückprojiziert. Diese werden sodann vom KNN bewertet und erneut zu einem 3D-Modell kombiniert.

Bisher wurden Bilder, die von den Kameras aufgenommen wurden, von dem KNN einzeln verarbeitet und bewertet, unabhängig davon, ob sie vom selben Objekt stammen oder nicht. Diese zusätzlichen Informationen können jedoch sehr nützlich sein, insbesondere wenn derselbe Teil des Objekts aus mehr als einer Perspektive erfasst wurde.

In diesem Zusammenhang kann es weiter vorgesehen sein, dass für die Verarbeitung der dritten Dimension des Bildes bzw. Objektes ein *recurrent* neuronales Netzwerk verwendet wird, welches Reihen von Bildern eines Objektes als ein Teil einer Bildersequenz verarbeitet, wodurch Informationen eines Objektes aus einer Perspektive auf andere Perspektiven des gleichen Objektes übertragen werden. Um aussagekräftige Beschriftungen für alle Bilder desselben Objekts zu erhalten, bieten sich die 3D-Rekonstruktion des Objekts und die Beschriftung des 3D-Modells an.

Ein weiteres Ausführungsbeispiel der Erfindung kann es vorsehen, dass dem KNN zum Selbst-Lernen die Ausgaben der Neuronen wieder zugeführt werden, wobei Ausgabefehler von dem Netzwerk und/oder einer Person erkannt und als solche markiert werden. Es kann somit erfindungsgemäß eine Mischung aus überwachtem und unbeaufsichtigtem Lernen stattfinden. Mithilfe des überwachten Lernens kann die Maschine entscheiden, wo geschnitten werden soll. Außerdem können auch geschnittene Pflanzen auf dem Förderband bewertet werden. Basierend auf dieser zweiten Beurteilung der Pflanze bzw. des Schnitts kann sich eine Schneideinheit rechtzeitig ausrichten bzw. konfigurieren, um die von dem KI-System festgestellten Fehler zu reduzieren. Dieser Ansatz kann für alle Schritte, in denen ein gefertigtes Teil mehrfach bewertet wird, verallgemeinert werden. Die einzelnen Bildverarbeitungsstationen werden zunächst mit überwachtem Lernen geschult und neue *Labeling-Daten* werden automatisch online generiert. Die automatische Erzeugung neuer *Labels* oder Etiketten erfolgt durch Neubewertung der Ausgabe einer bestimmten Bildverarbeitungsstation mit Hilfe einer anderen Bildverarbeitungsstation, die das Objekt zu einem späteren Zeitpunkt sehen kann.

Bei Pflanzen bestimmt das KNN, an welchen Positionen die Pflanzen, insbesondere an welcher Position ein Meristem der Pflanze oder an welcher Position ein anderer Pflanzenbestandteil, geschnitten werden soll. Die Bilder von den den Vorgaben entsprechend geschnittenen Pflanzen werden dann gespeichert und verwendet, um das KNN automatisch neu zu trainieren (selbst überwachtes Lernen). Eine andere Möglichkeit des selbstständigen Lernens besteht darin, die Schnittqualität der Pflanzen direkt zu quantifizieren und diese Informationen online zurückzugeben, um dann das KNN direkt zu aktualisieren (*Reinforcement-Learning*)*.* Insbesondere ist es weiter denkbar, dass die Person dem Netzwerk die Informationen zur Verfügung stellt, wie es erkennt, wie das Merkmal des Objektes zu behandeln, insbesondere zu zerschneiden und/oder zu ergreifen, ist.

Vorzugsweise ist es vorgesehen, dass die erkannten strukturellen Merkmale der Objekte verwendet werden, um einen Laser für eine Behandlung des Objektes zu kalibrieren und/oder um einen Laser derart zu steuern, dass er das Objekt zielgerichtet zerschneidet. Eines der Kernelemente des erfindungsgemäßen Verfahrens stellt die Laserkamera-Kalibrierung dar, die das sogenannte "Was Sie sehen, ist was Sie schneiden" ermöglicht. Diese Laserkamera-Kalibrierung ermöglicht es, dass ein Schnitt, der zuvor in einem Pflanzenbild von dem KNN bestimmt wurde, in Laserkoordinaten umgewandelt werden kann, sodass der Laser genau schneidet, was das KNN vorgeschlagen hat.

Im Gegensatz zu Lasern, die zum Abtasten einer Oberfläche verwendet werden, wird der Laser bei dem Verfahren zum Schneiden von Pflanzen verwendet. Daher können herkömmliche Verfahren, die zur Laserkamera-Kalibrierung von Abtastlasern verwendet werden, hier nicht verwendet werden. Ein herkömmliches Verfahren würde ein Kalibrierungsobjekt verwenden, das sowohl von der Kamera als auch vom Laser erfasst wird, und würde die Transformation zwischen dem Laser- und dem Kamerakoordinatensystem basierend auf den verschiedenen Ansichten auf demselben Objekt berechnen. Da der Laser bei dem hier beschriebenen Verfahren nicht zum Abtasten verwendet wird, kann dieser Ansatz nicht verwendet werden, so dass ein neuartiger Ansatz erfunden werden muss. Nach der intrinsischen und extrinsischen Kamera-Kalibrierung der verwendeten Kamera, insbesondere Stereokamera, kann die Kamera jeden 3D-Punkt in ihrer Ansicht rekonstruieren. Um den Laser ordnungsgemäß auf die Kamera abzustimmen, wird ein Blatt Papier ungefähr in der Hauptfokusebene des Lasers platziert. Anschließend wird der Laser so gesteuert, dass er ein Raster bekannter Größe auf dem Papier markiert. Im nächsten Schritt wird ein neues Blatt Papier einige Zentimeter näher am Laser platziert und die Markierung erneut mit denselben Koordinaten wie im vorherigen Schritt durchgeführt. Die beiden Blätter werden dann unmittelbar nach dem Laserbeschriften von der Stereokamera aufgenommen. Alle Schnittpunkte des Gitters werden dann automatisch extrahiert. Aufgrund der vorherigen Kamera-Kalibrierung können ihre 3D-Koordinaten berechnet werden. Wenn das Raster aus m Zeilen und n Spalten besteht, enthält eine Ansicht insgesamt m x n Punkte, die von den Kameras erkannt werden, sodass insgesamt 2 x m x n Punkte aus den beiden Lasermarkierungen verfügbar sind. Diese Punkte werden verwendet, um die Position der Ursprungstransformation des Lasers mit 6 Freiheitsgraden in Bezug auf das Kamerakoordinatensystem abzuschätzen. Nachdem diese Transformation geschätzt wurde, kann jeder 3D-Punkt von Kamerakoordinaten in Laserkoordinaten umgewandelt werden. Daher kann jede der von dem KNN bestimmten 3D-Schnittlinie in Laserkoordinaten umgewandelt werden, sodass der Laser präzise entlang der vom KNN vorgeschlagenen Linien schneiden kann.

Ein neuronales Netz zur Lösung der genannten Aufgabe weist die Merkmale des Anspruchs 16 auf. Demnach ist es vorgesehen, dass ein neuronales Netz eine Vielzahl von Neuronen umfasst, wobei das Netz derart ausgestaltet ist, dass es mit einem Verfahren nach einem der vorhergehenden Ansprüchen 1 bis 15 angelernt ist.

Bevorzugte Ausführungsbeispiele im Zusammenhang mit der Erfindung werden nachfolgend anhand der Zeichnung näher beschrieben. In dieser zeigen:
- Fig. 1: eine Darstellung eines ersten Ausführungsbeispiels einer Vorrichtung,
- Fig. 2: eine Darstellung eines zweiten Ausführungsbeispiels der Vorrichtung,
- Fig. 3: eine Darstellung eines weiteren Ausführungsbeispiels der Vorrichtung,
- Fig. 4: eine Darstellung eines ersten Schrittes einer Bilderkennung,
- Fig. 5: eine Darstellung eines zweiten Schrittes der Bilderkennung,
- Fig. 6: eine Darstellung eines dritten Schrittes der Bilderkennung,
- Fig. 7: eine Darstellung eines weiteren Ausführungsbeispiels der Bilderkennung,
- Fig. 8a: eine Darstellung einer ersten Schnittlinie,
- Fig. 8b: eine Darstellung einer zweiten Schnittlinie, und
- Fig. 8c: eine Darstellung einer dritten Schnittlinie.

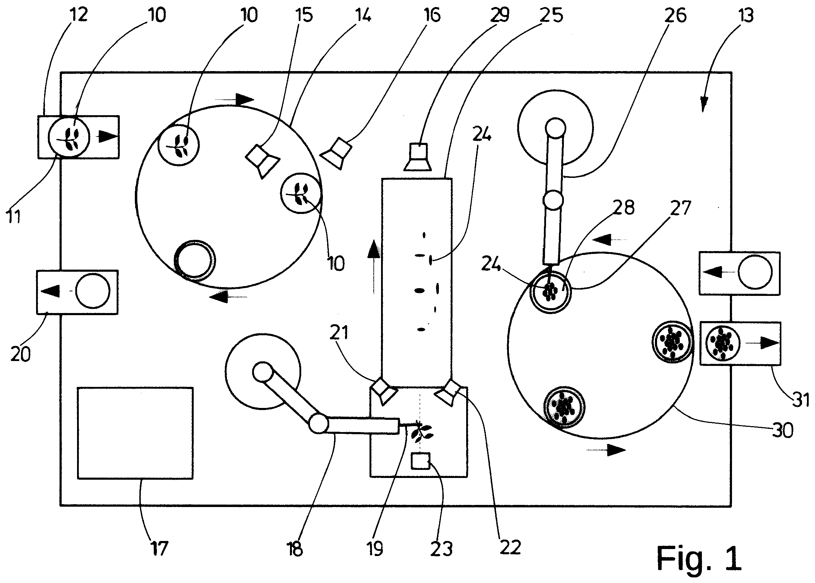

In der Fig. 1 wird stark schematisiert ein Ausführungsbeispiel einer Vorrichtung dargestellt. Das erfindungsgemäße Verfahren sowie das erfindungsgemäße KNN finden im Zusammenhang mit dieser beispielhaften Vorrichtung Anwendung. Es sei jedoch betont, dass das erfindungsgemäße Verfahren sowie das erfindungsgemäße KNN nicht auf die Verwendung im Zusammenhang mit dieser Vorrichtung eingeschränkt sind, sondern vielmehr auch im Zusammenhang mit anderen Problemstellungen einsetzbar sind.

Im Wesentlichen dienen das Verfahren und die Vorrichtung der automatisierten Vermehrung von Pflanzen. Durch die hier dargestellte Vorrichtung sowie durch das erfindungsgemäße Verfahren wird die Vermehrungsrate bzw. Wachstumsrate für Pflanzen verbessert. Bei dem in der Fig. 1 dargestellten Ausführungsbeispiel wird eine Pflanze 10 oder ein Bestandteil einer Pflanze 10 zunächst in einem, vorzugsweise sterilen, Behälter 11 auf einem Fördermittel 12 einem Arbeitsbereich 13 zugeführt. Dieser Arbeitsbereich 13 kann ggf. ebenfalls steril gehalten werden. Von dem Fördermittel 12, das beispielsweise als Schleuse ausgebildet sein kann, wird der Behälter 11 samt der Pflanze 10 einem ersten Förderer 14 zugeführt. Bei diesem ersten Förderer 14 kann es sich neben dem in der Fig. 1 als rotierende Scheibe dargestellten Ausführungsbeispiel auch um ein Förderband oder ein Tablett handeln.

Auf diesem ersten Förderer 14 wird die Pflanze 10 von einer zwei Kameras 15, 16 aufweisenden Bilderkennungseinrichtung erfasst. Anhand der so gewonnenen Informationen über die Pflanze 10 werden durch die Steuereinheit Positionen ermittelt, an denen die Pflanze 10 besonders bevorzugt durch das erste Greifmittel 18 erfasst werden kann. Das erste Greifmittel 18, das hier als Roboterarm ausgebildet ist, weist eine Pinzette 19 auf, mit der die Pflanze 10 aus dem Behälter 11 entnommen wird. Sofern die Pflanze 10 fest in den Behälter 11 verwurzelt ist, kann die Pflanze 10 aus dem Behälter 11 herausgezogen werden oder mit einem beispielsweise willkürlichen Schnitt durch ein Schneidmittel von den Wurzeln getrennt werden. Der sodann leere Behälter 11 wird über ein weiteres Fördermittel 20 wieder aus dem Arbeitsbereich 13 entfernt.

Die an der Pinzette 19 hängende Pflanze 10 wird sodann einer weiteren Bilderkennungseinrichtung mit zwei weiteren Kameras 21, 22 zugeführt. Durch diese Kameras 21, 22 werden von der hängenden Pflanze 10 Aufnahmen aus verschiedenen Perspektiven aufgenommen. Die so gewonnenen Informationen über die Pflanze 10 werden von der Steuereinheit 17 genutzt, um pflanzenspezifische Merkmale der Pflanze zu erkennen. Bei diesen pflanzenspezifischen Merkmalen kann es sich beispielsweise um die Art der Pflanze sowie Eigenschaften von Blättern, Stielen oder Ästen handeln. Es ist außerdem denkbar, dass die Steuereinheit 17 die Art der Pflanze erkennt. Gleichermaßen ist es jedoch auch denkbar, dass eine Bedienperson vorab die Art der zu vermehrenden Pflanze in die Steuereinheit 17 über ein Eingabemittel eingegeben hat. In der Steuereinheit 17 wird sodann durch das erfindungsgemäße KNN auf Basis der erkannten pflanzenspezifischen Merkmale eine ideale Schnittposition bzw. ein ideales Schnittmuster ermittelt. Dabei verwendet das KNN für diese Bestimmung nicht nur die Informationen der vorliegenden Pflanze 10, sondern auch Informationen über vorherige Pflanzen sowie Daten, die vorab von einer Bedienperson dem neuronalen Netzwerk zur Verfügung gestellt wurden.

Mithilfe der KNN und dem erfindungsgemäßen Verfahren kann nicht nur die ideale Schnittlinie bestimmt werden, sondern auch die Art und/oder die physikalischen Eigenschaften eines Schneidmittels für einen optimalen Schnitt bestimmt werden. Bei dem in der Fig. 1 dargestellten Ausführungsbeispiel handelt es sich bei dem Schneidmittel um einen Laser 23. Dieser Laser 23 kann in Abhängigkeit von den erkannten pflanzenspezifischen Merkmalen derart moduliert werden, dass ein für die Bewurzelung des Klons besonders bevorzugtes Schnittbild erzeugt wird. Es hat sich gezeigt, dass durch die Wahl der Lasereigenschaften die Bewurzelung und somit das Wachstum des Klons stimulierbar sind. Für ein ideales Schnittbild bzw. Schnittmuster wird sowohl die Intensität des Lasers, die Wellenlänge und der Fokus bzw. die Fokallänge derart verändert, dass die Pflanze berührungslos und somit quetschungsfrei zerschnitten wird. Durch diese gezielte Deponierung der Energie wird das Gewebe der Pflanze so gut wie nicht beeinträchtigt; vielmehr wird das weitere Wachstum sogar noch stimuliert.

Der abgetrennte Bestandteil 24 bzw. der Klon fällt sodann auf einen zweiten Förderer 25. Es kann vorgesehen sein, dass ein zweites Greifmittel 26 den Klon 24 von diesem zweiten Förderer 25 ergreift und einem Behälter 27 mit einem Nährmedium 28 zuführt. Für eine bevorzugte Aufnahme des Klons 24 durch das zweite Greifmittel 26 dient ebenfalls eine Kamera 29, die für die Ermittlung einer optimalen Greifposition ebenfalls mit der Steuereinheit 17 verbunden ist. Die so gefüllten Behälter 27 werden sodann über einen dritten Förderer 30 und ein Fördermittel 31 aus dem Arbeitsbereich 13 ausgeschleust. Mit den in der Fig. 1 dargestellten Pfeilen werden Bewegungsrichtungen der einzelnen Komponenten symbolisiert.

Durch die in der Fig. 1 dargestellte Bilderkennung werden somit pflanzenspezifische Merkmale der Pflanze 10 erkannt und durch das KNN Schnittlinien ermittelt, entlang denen die Pflanze sodann mit einem geeigneten Schneidmittel zerschnitten wird. Dabei sei darauf hingewiesen, dass die Erfindung nicht auf die dargestellte Anzahl der Greifmittel 18, 26, die Anzahl der Förderer 14, 25, 30 sowie die Anzahl der Kameras 15, 21, 22, 29 beschränkt ist. Vielmehr kann es vorgesehen sein, dass der Vorrichtung zur Bilderkennung eine Vielzahl von Kameras zugeordnet ist. Gleichermaßen ist es denkbar, dass die Vorrichtung nur ein Fördermittel zum Abfördern eines Klons aufweist.

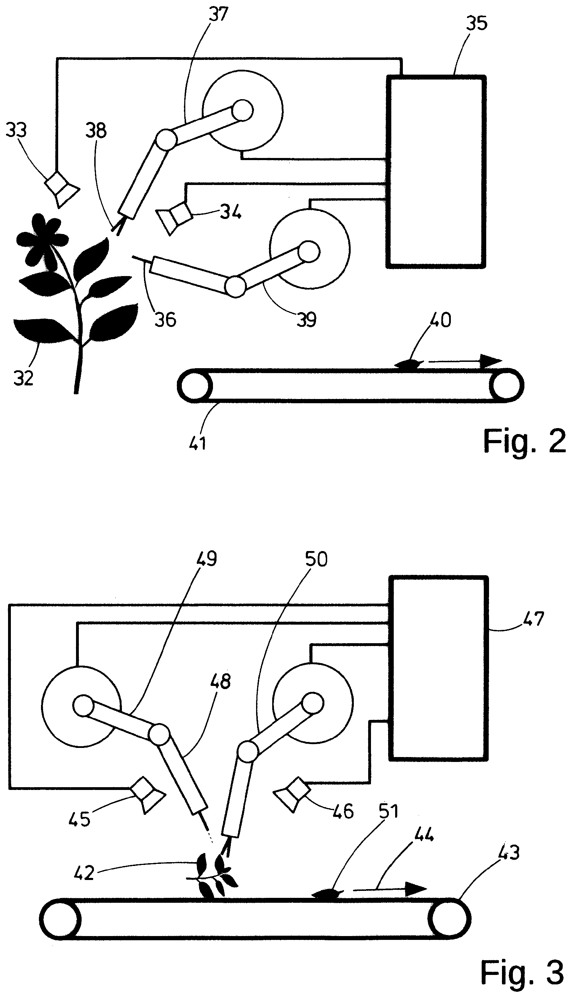

In Fig. 2 ist ein weiteres Ausführungsbeispiel einer Vorrichtung dargestellt, das im Zusammenhang mit dem erfindungsgemäßen Verfahren und dem erfindungsgemäßen KNN verwendbar ist. Hier wird durch die Kameras 33, 34 der Bilderkennungseinrichtung und das KNN direkt an der Pflanze 32 eine Position ermittelt, die besonders gut geeignet ist für das Abschneiden eines Klons. Auch hier sind die Kameras 33, 34 mit einer Steuereinheit 35 verbunden. Die Steuereinheit 35 ermittelt mithilfe des KNN nicht nur eine optimale Schnittposition bzw. eine optimale Schnittlinie, sondern auch optimale Schnittbedingungen. So wird durch das neuronale Netzwerk bestimmt, wie der hier verwendete Laser 36 zu modulieren bzw. zu steuern ist, um ein ideales Schnittbild zu erstellen. Neben der Modulation erfolgt ebenfalls die Anpassung der Fokallänge an die zu schneidende Position. Sobald eine entsprechende Position von der Steuereinheit 35 zum Schneiden der Pflanze 32 ermittelt wurde, wird der Pflanzenbestandteil durch das Greifmittel 37 mittels Pinzette 38 ergriffen und der zweite den Laser 36 haltende Roboterarm derart bewegt, dass die Pflanze gemäß dem ermittelten Schnittbild zerschnitten wird. Der abgetrennte Bestandteil 40 bzw. der Klon der Pflanze 32 kann sodann von dem Greifmittel 37 auf einem Förderer 41 abgelegt werden. Der Förderer 41 transportiert den abgetrennten Bestandteil 40 sodann zu einer weiteren Station der Verarbeitung. Hier kann der abgetrennte Bestandteil 40 beispielsweise gemäß dem in der Fig. 1 dargestellten Verfahren weiterbehandelt werden.

In der Fig. 3 ist ein weiteres Ausführungsbeispiel der Erfindung dargestellt. Bei diesem Ausführungsbeispiel liegt eine Pflanze 42 oder ein Bestandteil einer Pflanze 42 auf einem Förderer 43 und wird in Pfeilrichtung 44 einer aus zwei Kameras 45 und 46 bestehenden Bildverarbeitungseinrichtung zugeführt. Losgelöst von dem hier dargestellten Ausführungsbeispiel kann die Bilderkennungseinrichtung auch weitere Kameras aufweisen. Genau wie zuvor in dem in der Fig. 2 dargestellten Beispiel beschrieben, werden auch hier durch die Kameras 45, 46 und durch eine Steuereinheit 47 und das KNN ein optimales Schnittbild sowie bevorzugte physikalische Eigenschaften des Schneidmittels bzw. des Lasers ermittelt. Sobald diese Informationen von der Steuereinheit 47 erzeugt wurden, wird durch den Laser 48 ein entsprechender Schnitt vollzogen. Es ist auch denkbar, dass die Pflanze 42 mehrfach von dem Laser 48 geschnitten wird. Auch hier ist der Laser 48 für eine optimale Beweglichkeit einem Roboterarm 49 zugeordnet. Bei dem in der Fig. 3 dargestellten Ausführungsbeispiel dient das Greifmittel 50 lediglich dazu, entweder die Pflanze 42 auf den Förderer 43 abzulegen, restliche Bestandteile der Pflanze 42 von dem Förderer 43 zu entfernen oder den abgetrennten Bestandteil 51 einer weiteren Verarbeitungsstation zuzuführen. Es ist jedoch auch denkbar, dass bei dem in der Fig. 3 dargestellten Ausführungsbeispiel der Erfindung auf das Greifmittel 50 komplett verzichtet wird.

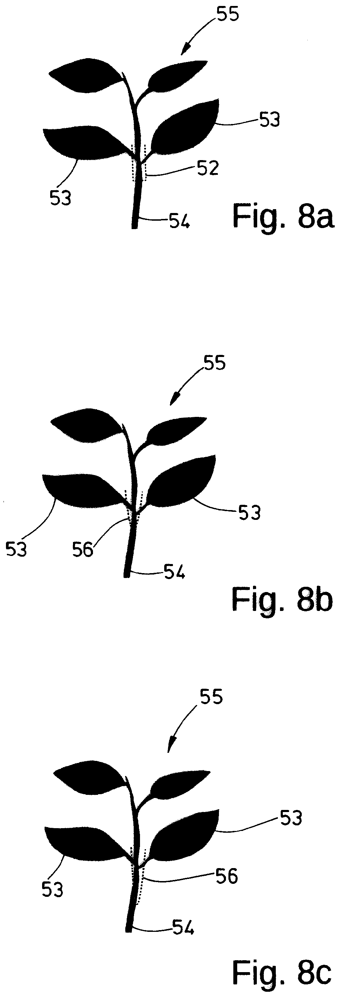

Je nach Art der Pflanze sowie den Anforderungen an die Teilung kann es vorteilhaft sein, für das Schneiden verschiedene Schnittbilder zu verwenden. In der Fig. 8a ist ein U-förmiger Schnitt dargestellt, der sowohl zwei Blätter 53 als auch einen Teil des Stammes 54 von der Pflanze 55 trennt. Somit werden durch einen einzigen Schnitt mittels eines Lasers, eines Wasserstrahls oder eines Plasmastrahls drei Bestandteile der Pflanze 55 abgetrennt. Bei einem händischen, konventionellen Schneiden wären hierfür drei einzelne Schnitte notwendig. Dieser U-Schnitt 52 kann sowohl in einer an einem Greifmittel hängenden Position der Pflanze 55 erfolgen, als auch in einer auf einem Förderer liegenden Position. Es ist außerdem denkbar, dass ein derartiger Schnitt auch durch ein Stanzmittel aus Metall oder einer Keramik durchgeführt wird. Dabei kann insbesondere ein Stanzeisen durch Beaufschlagung mit Wärme oder elektrischem Strom keimfrei gehalten werden. Allerdings lässt sich nur durch die Verwendung eines Laserstrahls bzw. eines Wasserstrahls oder eines Plasmastrahls ein besonders bevorzugter berührungsloser sowie quetschfreier Schnitt realisieren.

Neben dem in der Fig. 8a dargestellten U-Schnitt 52 ist es außerdem denkbar, mit dem Laser einen V-Schnitt 56 zu vollziehen (Fig. 8b). Auch hier werden sowohl zwei Blätter 53 als auch ein Teil des Stammes 54 abgeschnitten. Allerdings unterscheidet sich der Schnitt in dem Stamm 54 von dem geraden Schnitt aus der Fig. 8a. Dieser V-Schnitt 56 kann wenigstens für einige Pflanzenarten besonders für die Bewurzelung der Schnittkante vorteilhaft sein.

Weiter kann es vorgehen sein, dass der V-Schnitt 56 aus der Fig. 8b leicht neben dem Stamm 54 gesetzt wird, wodurch zum einen nach wie vor durch einen Schnitt zwei Blätter 53 von der Pflanze 55 getrennt werden und darüber hinaus eine Schnittfläche an dem Stamm 54 maximiert wird. Durch diese besonders große Schnittfläche kann der abgetrennte Bestandteil der Pflanze 55 besonders viele Nährstoffe aufnehmen, was zu einer besonderes bevorzugten Wachstumsrate bzw. Bewurzelung führt.

Neben den in den Fig. 8a bis 8c dargestellten Beispielen für Schnittbilder ist eine Vielzahl weiterer Schnittbilder denkbar, mit denen auf eine effiziente Art und Weise mehrere Bestandteile einer Pflanze gleichzeitig zerschnitten werden und die Bewurzelung der abgetrennten Pflanze stimuliert wird. Die Art und die Position der Schnitte werden ebenfalls von dem KNN ermittelt.

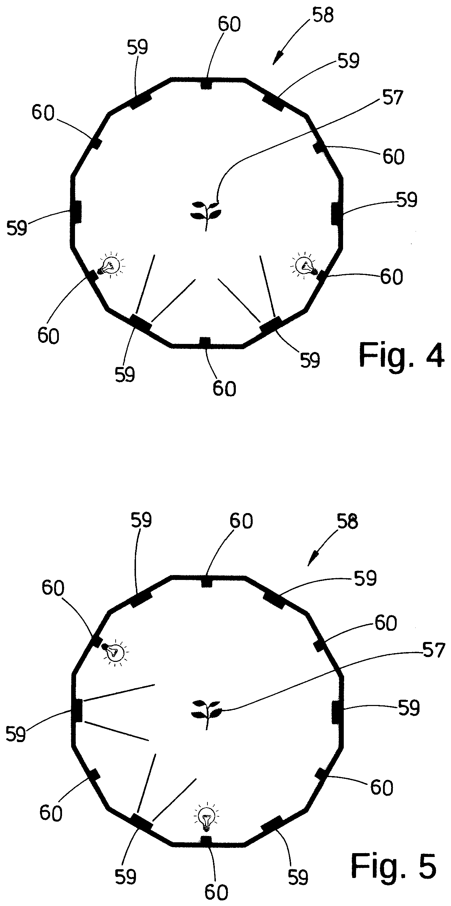

In den Fig. 4 bis 6 ist ein Ausführungsbeispiel der Bilderkennung einer Pflanze 57 stark schematisiert dargestellt. Für die Erfassung eines räumlichen Abbilds der Pflanze 57 wird selbige durch ein nicht dargestelltes Greifmittel in eine ringartige Bilderkennungseinrichtung 58 gehängt. Vorzugsweise wird die Pflanze 57 dabei zentral in der Bilderkennungseinrichtung 58 positioniert. Der Ring kann einen Durchmesser von einigen wenigen Dezimetern, d. h. 20 cm bis 30 cm bzw. 30 cm bis 40 cm oder 40 cm bis 50 cm, aufweisen und eine Wandungshöhe von 5 cm bis 10 cm bis 10 cm bis 20 cm oder 20 cm bis 30 cm. Es ist jedoch auch denkbar, dass die hier dargestellte Bilderkennungseinrichtung 58 andersartig dimensioniert ist. Bei dem in den Fig. 4 bis 6 dargestellten Ausführungsbeispiel der Bilderkennungseinrichtung 58 weist der Ring gerade Abschnitte auf. Diesen zwölf Abschnitten sind im Wechsel jeweils eine Kamera 59 sowie ein Leuchtmittel 60 zugeordnet. D. h., dem dargestellten Ausführungsbeispiel der Bilderkennungseinrichtung 58 sind sechs Kameras 59 und sechs Leuchtmittel 60 zugeordnet.

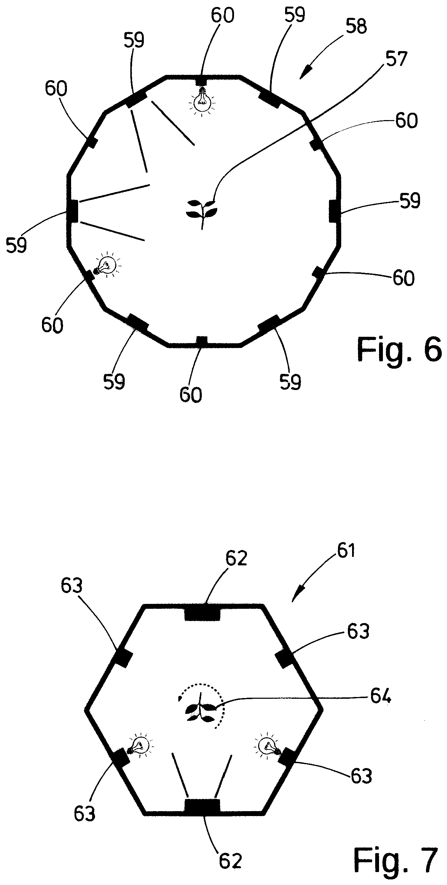

In einem ersten Schritt der Bilderkennung werden zwei, vorzugsweise nebeneinanderliegende, Kameras 59 aktiviert. Gleichzeitig werden Leuchtmittel 60, die den Kameras 59 naheliegen, ausgelöst, welche die Pflanze 57 ausreichend beleuchten (Fig. 4). Die Leuchtmittel 60 sind derart zu schalten, dass sie die aktivierten Kameras 59 nicht blenden. Die übrigen Kameras 59 bzw. Leuchtmittel 60 sind nicht aktiviert. In einem in der Fig. 5 dargestellten zweiten Schritt wird ein folgendes Paar Kameras 59 aktiviert und gleichfalls die beiden anliegenden Leuchtmittel 60 eingeschaltet. Im darauffolgenden Schritt der Bilderkennung gemäß Fig. 6 wird ein nächstes Paar von Kameras 59 und die entsprechenden Leuchtmittel 60 aktiviert. Dieses Verfahren wird fortgesetzt, bis die Pflanze 57 aus allen Richtungen über einen Raumwinkel von 360°, durch die Kamerapaare, d. h., in dem genannten Beispiel zwölf Aufnahmen, erfasst wurde. Wenn die Kameras 59 mit K1, K2, K3, K4, K5, K6 und die Leuchtmittel 60 mit L1, L2, L3, L4, L5, L6 benannt werden, so ergeben sich die drei Schritte: Schritt 1: L1, K1, L2, K2, L3; Schritt 2: L3, K3, L4, K4, L5, Schritt 3: L5, K5, L6, K6, L1. Die sukzessive Ansteuerung der Kameras 59 und der Leuchtmittel 60 erfolgt dabei durch eine der Bilderkennungseinrichtung 58 zugeordnete Steuereinrichtung. Es ist natürlich auch denkbar, dass weniger oder mehr Kameras 59 verwendet werden, die dann gegebenenfalls paarweise verschiedene Winkelabschnitte der Pflanze 57 sukzessiv abbilden.

Die so erfassten Bilder werden von der zuvor diskutierten Steuereinheit bzw. von dem KNN ausgewertet. Diese Auswertung beinhaltet das Erkennen von pflanzenspezifischen Merkmalen, entlang derer die Pflanze bevorzugt durch ein Schneidmittel geteilt werden kann. Diese Bilderfassung bzw. diese Sequenz der einzelnen Aufnahmen dauert wenige 100 Millisekunden.

Im Weiteren kann es vorgesehen sein, dass die Pflanze 57 direkt in der ringartigen Bilderkennungseinrichtung 58, auch Theater genannt, durch ein Schneidmittel zerschnitten wird. Der abgetrennte Bestandteil der Pflanze 57 kann entweder durch ein weiteres Greifmittel erfasst werden oder auf einen unter der Bilderkennungseinrichtung 58 positionierten Förderer abgefördert werden.

Die in den Fig. 4 bis 6 aktivierten Kameras sind durch einen schematisch dargestellten Aufnahmekegel hervorgehoben. Den in den Fig. 4 bis 6 aktivierten Leuchtmitteln 60 ist jeweils eine Glühbirne zugeordnet.

In der Fig. 7 ist ein weiteres Ausführungsbeispiel einer Bilderkennungseinrichtung 61 dargestellt. Auch dieses Ausführungsbeispiel ist ähnlich wie bei dem in den Fig. 4 bis 6 dargestellten Ausführungsbeispiel einer Bilderkennungseinrichtung 58 ringartig ausgebildet. Hier weist der Ring jedoch lediglich sechs gerade Seitenflächen auf. Dementsprechend sind den Innenwandungen der Bilderkennungseinrichtung 61 nur zwei gegenüberliegende Kameras 62 sowie vier Leuchtmittel 63 zugeordnet. Genau wie zuvor beschrieben, wird jeweils eine Kamera 62 mit zwei angrenzenden Leuchtmitteln 63 zusammen aktiviert, um ein Abbild der Pflanze 64 zu erstellen. Danach werden die entsprechend gegenüberliegende Kamera 62 sowie die gegenüberliegenden Leuchtmittel 63 aktiviert, um eine zweite Aufnahme der Pflanze 64 zu erstellen. Um die geringere Anzahl der Kameras zu kompensieren, wird nach jeder Aufnahme die Pflanze 64 um einen bestimmten Winkelbereich gedreht, sodass nacheinander mehrere Aufnahmen von verschiedenen Positionen der Pflanze 64 gemacht werden. Aus der Gesamtheit aller so gewonnen Abbildungen lassen sich wiederum durch die Steuereinheit bzw. das KNN pflanzenspezifische Merkmale der Pflanze 64 erkennen.

Neben den hier dargestellten Ausführungsbeispielen der Bilderkennungseinrichtungen 58, 61 sind weitere Geometrien mit mehr bzw. weniger Kameras denkbar. Diese Bilderkennungseinrichtungen 58, 61 können den Ausführungsbeispielen der Erfindung gemäß den Fig. 1 bis 3 zugeordnet sein. Durch diese Kombination der Bilderkennung und der spezifizierten Schneidmethode lässt sich ein besonders effizientes Verfahren zum Vermehren von Pflanzen erzeugen.

### Bezugszeichenliste

| | | | |
|---|---|---|---|
| 10 | Pflanze | 43 | Förderer |
| 11 | Behälter | 44 | Pfeilrichtung |
| 12 | Fördermittel | 45 | Kamera |
| 13 | Arbeitsbereich | 46 | Kamera |
| 14 | erster Förderer | 47 | Steuereinheit |
| 15 | Kamera | 48 | Laser |
| 16 | Kamera | 49 | Roboterarm |
| 17 | Steuereinheit | 50 | Greifmittel |
| 18 | erstes Greifmittel | 51 | Bestandteil |
| 19 | Pinzette | 52 | U-Schnitt |
| 20 | Fördermittel | 53 | Blatt |
| 21 | Kamera | 54 | Stamm |
| 22 | Kamera | 55 | Pflanze |
| 23 | Laser | 56 | V-Schnitt |
| 24 | Bestandteil | 57 | Pflanze |
| 25 | zweiter Förderer | 58 | Bilderkennungseinrichtung |
| 26 | zweites Greifmittel | 59 | Kamera |
| 27 | Behälter | 60 | Leuchtmittel |
| 28 | Nährmedium | 61 | Bilderkennungseinrichtung |
| 29 | Kamera | 62 | Kamera |
| 30 | dritter Förderer | 63 | Leuchtmittel |
| 31 | Fördermittel | 64 | Pflanze |
| 32 | Pflanze | | |
| 33 | Kamera | | |
| 34 | Kamera | | |
| 35 | Steuereinheit | | |
| 36 | Laser | | |
| 37 | Greifmittel | | |
| 38 | Pinzette | | |
| 39 | Roboterarm | | |
| 40 | Bestandteil | | |
| 41 | Förderer | | |
| 42 | Pflanze | | |

## Patentansprüche

1. Verfahren zum rechnergestützten Lernen eines künstlichen neuronalen Netzwerkes zur Erkennung von strukturellen Merkmalen an Objekten, nämlich an Pflanzen oder an Pflanzenbestandteilen zur Klonierung dieser Pflanzen, wobei die strukturellen Merkmale besonders geeignete Schnittpositionen an der Pflanze darstellen, wobei als Netzwerk ein *convolutional* neuronales Netzwerk (CNN), insbesondere ein regionales *convolutional* neuronales Netzwerk (R-CNN), mit einer Vielzahl von Neuronen verwendet wird, das eine Vielzahl von *convolutional* und/oder *pooling* Schichten aufweist zur Extraktion von Informationen aus Bildern der Objekte mit den zu erkennenden strukturellen Merkmalen für eine Klassifikation der Merkmale durch weitere Schichten, wobei die Bilder von Schicht zu Schicht hoch- und runterskaliert werden und wobei bei der Skalierung der Bilder von Schicht zu Schicht Informationen über die strukturellen Merkmale der Objekte erhalten werden und zwar unabhängig von der Skalierung der Bilder, wobei mehrere Bilder aus verschiedenen Perspektiven des gleichen Objektes zur Erkennung der strukturellen Merkmale gleichzeitig an das neuronale Netzwerk übergeben werden, und wobei rechnergestützte Operationen zur Erkennung der strukturellen Merkmale des Objektes auf den Bildern parallel auf mehreren GPUs durchgeführt werden.

2. Verfahren zum rechnergestützten Lernen eines künstlichen neuronalen Netzwerkes zur Erkennung von strukturellen Merkmalen an Objekten nach Anspruch 1, **dadurch gekennzeichnet, dass** die mehreren Bilder des gleichen Objektes vor der Übergabe an das neuronale Netzwerk skaliert, insbesondere *reskaliert,* und *gestitched* werden.

3. Verfahren zum rechnergestützten Lernen eines künstlichen neuronalen Netzwerkes zur Erkennung von strukturellen Merkmalen an Objekten nach den vorhergehenden Ansprüchen, **dadurch gekennzeichnet, dass** ein *Labeling* bzw. eine Benennung der Merkmale der Objekte auf den Bildern in Vorbereitung auf den Lernprozess des neuronalen Netzwerkes halbautomatisch durchgeführt wird, wobei vorzugsweise zunächst eine Isolierung der Merkmale und/oder der Objekte von einem Hintergrund der Bilder erfolgt und insbesondere darauffolgend ein *Labeling* der Merkmale durch eine Person.

4. Verfahren zum rechnergestützten Lernen eines künstlichen neuronalen Netzwerkes zur Erkennung von strukturellen Merkmalen an Objekten nach Anspruch 3, **dadurch gekennzeichnet, dass** ein *Labeling* der Merkmale der Objekte rechnergestützt vorgeschlagen wird.

5. Verfahren zum rechnergestützten Lernen eines künstlichen neuronalen Netzwerkes zur Erkennung von strukturellen Merkmalen an Objekten nach Anspruch 3 oder 4, **dadurch gekennzeichnet, dass** vor dem *Labeling* die verwendeten Bilder vorsortiert werden, wobei nur Bilder für das *Labeling* verwendet werden, deren Objekte und/oder Merkmale der Objekte sich von Objekten und/oder Merkmalen der Objekte anderer Bilder unterscheiden.

6. Verfahren zum rechnergestützten Lernen eines künstlichen neuronalen Netzwerkes zur Erkennung von strukturellen Merkmalen an Objekten nach einem der Ansprüche 3 bis 5, **dadurch gekennzeichnet, dass** die Bilder nach dem *Labeling* gruppiert werden in Gruppen von Bildern mit Objekten, die wenige strukturelle Merkmale, viele strukturelle Merkmalen und/oder komplexe strukturelle Merkmale aufweisen.

7. Verfahren zum rechnergestützten Lernen eines künstlichen neuronalen Netzwerkes zur Erkennung von strukturellen Merkmalen an Objekten nach den vorhergehenden Ansprüchen, **dadurch gekennzeichnet, dass** für das Lernen des Netzwerkes die Bilder mit den Objekten, deren Merkmale zu erkennen sind, nur einigen Schichten, insbesondere den oberen Schichten, zugeführt werden und nur die Gewichtungen dieser Schichten angepasst werden, wobei die übrigen Schichten für den Lernprozess des Netzwerkes nicht angepasst werden, insbesondere deren Gewichtungen für alle Bilder unverändert bleiben.

8. Verfahren zum rechnergestützten Lernen eines künstlichen neuronalen Netzwerkes zur Erkennung von strukturellen Merkmalen an Objekten nach den vorhergehenden Ansprüchen, **dadurch gekennzeichnet, dass** für den Lernprozess nur die Gewichtungen der oberen Schichten angepasst werden und die übrigen Schichten für den Lernprozess nicht angepasst werden, wobei insbesondere die Gewichtungen der oberen Schichten für jedes Bild angepasst werden und für die übrigen Schichten die Wichtungen für alle Bilder nicht angepasst werden.

9. Verfahren zum rechnergestützten Lernen eines künstlichen neuronalen Netzwerkes zur Erkennung von strukturellen Merkmalen an Objekten nach den vorhergehenden Ansprüchen, **dadurch gekennzeichnet, dass** die einzelnen Verfahrensschritte parallel auf mehreren Rechnereinheiten gleichzeitig durchgeführt werden, wobei die notwendigen Operationen derart auf alle Rechnereinheiten verteilt werden, dass eine optimale Ausnutzung der Rechnerkapazität erzielt wird.

10. Verfahren zum rechnergestützten Lernen eines künstlichen neuronalen Netzwerkes zur Erkennung von strukturellen Merkmalen an Objekten nach den vorhergehenden Ansprüchen, **dadurch gekennzeichnet, dass** das *Labeling* an einem 3-dimensionalen Bild bzw. Objekt durchgeführt wird, wobei das 3-dimensionale Bild bzw. Objekt auf zwei Dimensionen projiziert und dem neuronalen Netzwerk zum Lernen zugeführt wird und anschließend zurück in ein 3-dimensionales Bild bzw. Objekt umgewandelt wird.

11. Verfahren zum rechnergestützten Lernen eines künstlichen neuronalen Netzwerkes zur Erkennung von strukturellen Merkmalen an Objekten nach Anspruch 10, **dadurch gekennzeichnet, dass** für die Verarbeitung der dritten Dimension des Bildes bzw. Objektes ein *recurrent* neuronales Netzwerk verwendet wird, welches Reihen von Bildern eines Objektes als ein Teil einer Bildersequenz verarbeitet, wodurch Informationen eines Objektes aus einer Perspektive auf andere Perspektiven des gleichen Objektes übertragen werden.

12. Verfahren zum rechnergestützten Lernen eines künstlichen neuronalen Netzwerkes zur Erkennung von strukturellen Merkmalen an Objekten nach den vorhergehenden Ansprüchen, **dadurch gekennzeichnet, dass** dem neuronalen Netzwerk zum Selbst-Lernen die Ausgaben der Neuronen wieder zugeführt werden, wobei Ausgabefehler von dem Netzwerk und/oder einer Person erkannt und als solche markiert werden.

13. Verfahren zum rechnergestützten Lernen eines künstlichen neuronalen Netzwerkes zur Erkennung von strukturellen Merkmalen an Objekten nach Anspruch 12, **dadurch gekennzeichnet, dass** die Person dem Netzwerk die Informationen zur Verfügung stellt, wie es erkennt, wie das Merkmal des Objektes zu behandeln, insbesondere zu zerschneiden und/oder zu ergreifen, ist.

14. Verfahren zum rechnergestützten Lernen eines künstlichen neuronalen Netzwerkes zur Erkennung von strukturellen Merkmalen an Objekten nach den vorhergehenden Ansprüchen, **dadurch gekennzeichnet, dass** die erkannten strukturellen Merkmale der Objekte verwendet werden, um einen Laser für eine Behandlung des Objektes zu kalibrieren und/oder um einen Laser derart zu steuern, dass er das Objekt zielgerichtet zerschneidet.

15. Künstliches neuronales Netzwerk umfassend eine Vielzahl von Neuronen, wobei das Netz derart ausgestaltet ist, dass es mit einem Verfahren nach einem der vorhergehenden Ansprüchen 1 bis 14 gelernt ist.

## Claims

1. A method for the computer-aided training of an artificial neural network for recognizing structural features on objects, namely on plants or on plant constituents for the cloning of these plants, wherein the structural features represent particularly suitable cutting positions on the plant, wherein the network used is a *convolutional* neural network (CNN), in particular a regional *convolutional* neural network (R-CNN), having a multiplicity of neurons, said network comprising a multiplicity of *convolutional* and/or *pooling* layers for the extraction of information from images of the objects having the structural features to be recognized for a classification of the features by further layers, wherein the images are scaled up and down from layer to layer and wherein during the scaling of the images from layer to layer information about the structural features of the objects is obtained, specifically independently of the scaling of the images, wherein a plurality of images from different perspectives of the same object for recognizing the structural features are transferred simultaneously to the neural network, and wherein computer-aided operations for recognizing the structural features of the object are carried out on the images in parallel on a plurality of GPUs.

2. The method for the computer-aided training of an artificial neural network for recognizing structural features on objects as claimed in claim 1, **characterized in that** the plurality of images of the same object are scaled, in particular *rescaled,* and *stitched* prior to transfer to the neural network.

3. The method for the computer-aided training of an artificial neural network for recognizing structural features on objects as claimed in the preceding claims, **characterized in that** *labelling* or designation of the features of the objects is carried out semi-automatically on the images in preparation for the training process of the neural network, wherein preferably firstly the features and/or the objects are isolated from a background of the images and in particular afterward *labelling* of the features is carried out by a person.

4. The method for the computer-aided training of an artificial neural network for recognizing structural features on objects as claimed in claim 3, **characterized in that** *labelling* of the features of the objects in a computer-aided manner is proposed.

5. The method for the computer-aided training of an artificial neural network for recognizing structural features on objects as claimed in claim 3 or 4, **characterized in that** the images used are pre-sorted prior to the *labelling,* wherein only images whose objects and/or features of the objects differ from objects and/or features of the objects of other images are used for the *labelling.*

6. The method for the computer-aided training of an artificial neural network for recognizing structural features on objects as claimed in any of claims 3 to 5, **characterized in that** after the *labelling* the images are grouped into groups of images having objects which have few structural features, many structural features and/or complex structural features.

7. The method for the computer-aided training of an artificial neural network for recognizing structural features on objects as claimed in the preceding claims, **characterized in that** for the training of the network the images having the objects whose features are to be recognized are fed only to a few layers, in particular to the upper layers, and only the weightings of these layers are adapted, wherein the rest of the layers are not adapted for the training process of the network, in particular their weightings remain unchanged for all of the images.

8. The method for the computer-aided training of an artificial neural network for recognizing structural features on objects as claimed in the preceding claims, **characterized in that** for the training process only the weightings of the upper layers are adapted and the rest of the layers are not adapted for the training process, wherein in particular the weightings of the upper layers are adapted for each image and for the rest of the layers the weightings are not adapted for all of the images.

9. The method for the computer-aided training of an artificial neural network for recognizing structural features on objects as claimed in the preceding claims, **characterized in that** the individual method steps are carried out simultaneously in parallel on a plurality of computer units, wherein the necessary operations are distributed among all the computer units in such a way that an optimum utilization of the computer capacity is attained.

10. The method for the computer-aided training of an artificial neural network for recognizing structural features on objects as claimed in the preceding claims, **characterized in that** the *labelling* is carried out on a 3-dimensional image or object, wherein the 3-dimensional image or object is projected on two dimensions and is fed to the neural network for training purposes and is subsequently converted back into a 3-dimensional image or object.

11. The method for the computer-aided training of an artificial neural network for recognizing structural features on objects as claimed in claim 10, **characterized in that** a *recurrent* neural network is used for the processing of the third dimension of the image or object, said network processing series of images of an object as a part of an image sequence, whereby information of an object from one perspective is transferred to other perspectives of the same object.

12. The method for the computer-aided training of an artificial neural network for recognizing structural features on objects as claimed in the preceding claims, **characterized in that** the outputs of the neurons are fed again to the neural network for self-training purposes, wherein output errors are recognized by the network and/or a person and are marked as such.

13. The method for the computer-aided training of an artificial neural network for recognizing structural features on objects as claimed in claim 12, **characterized in that** the person makes available to the network the information regarding how said network recognizes how the feature of the object is to be treated, in particular cut and/or grasped.

14. The method for the computer-aided training of an artificial neural network for recognizing structural features on objects as claimed in the preceding claims, **characterized in that** the recognized structural features of the objects are used in order to calibrate a laser for a treatment of the object and/or in order to control a laser in such a way that the latter cuts the object in a targeted manner.

15. An artificial neural network comprising a multiplicity of neurons, wherein the network is configured in such a way that it is trained by a method as claimed in any of the preceding claims 1 to 14.

## Revendications

1. Procédé d'apprentissage assisté par ordinateur d'un réseau neuronal artificiel pour la détection de caractéristiques structurelles sur des objets, à savoir sur des plantes ou sur des constituants de plantes pour le clonage de ces plantes, les caractéristiques structurelles représentant des positions de coupe particulièrement appropriées sur la plante, un réseau neuronal *convolutif* (CNN), en particulier un réseau neuronal *convolutif* régional (R-CNN) comprenant une pluralité de neurones, étant utilisé en tant que réseau, lequel présente une pluralité de couches *convolutives* et/ou de *regroupement* pour l'extraction d'informations d'images des objets ayant les caractéristiques structurelles à détecter pour une classification des caractéristiques par d'autres couches, les images étant mises à l'échelle supérieure et inférieure de couche en couche et des informations concernant les caractéristiques structurelles des objets étant conservées lors de la mise à l'échelle des images de couche en couche, et ce, indépendamment de la mise à l'échelle des images, plusieurs images du même objet sous différentes perspectives étant simultanément transférées au réseau neuronal pour la détection des caractéristiques structurelles, et des opérations assistées par ordinateur pour la détection des caractéristiques structurelles de l'objet étant effectuées en parallèle sur les images sur plusieurs GPU.

2. Procédé d'apprentissage assisté par ordinateur d'un réseau neuronal artificiel pour la détection de caractéristiques structurelles sur des objets selon la revendication 1, **caractérisé en ce que** les multiples images du même objet sont mises à l'échelle, en particulier *redimensionnées,* et *assemblées* avant le transfert au réseau neuronal.

3. Procédé d'apprentissage assisté par ordinateur d'un réseau neuronal artificiel pour la détection de caractéristiques structurelles sur des objets selon les revendications précédentes, **caractérisé en ce qu'**un *étiquetage* ou une désignation des caractéristiques des objets sur les images est effectué de manière semi-automatique en préparation du processus d'apprentissage du réseau neuronal, une isolation des caractéristiques et/ou des objets par rapport à un arrière-plan des images étant de préférence d'abord effectuée et en particulier, un *étiquetage* des caractéristiques étant ensuite effectué par une personne.

4. Procédé d'apprentissage assisté par ordinateur d'un réseau neuronal artificiel pour la détection de caractéristiques structurelles sur des objets selon la revendication 3, **caractérisé en ce qu'**un *étiquetage* des caractéristiques des objets est proposé de manière assistée par ordinateur.

5. Procédé d'apprentissage assisté par ordinateur d'un réseau neuronal artificiel pour la détection de caractéristiques structurelles sur des objets selon la revendication 3 ou 4, **caractérisé en ce qu'**avant *l'étiquetage,* les images utilisées sont prétriées, seules les images dont les objets et/ou les caractéristiques des objets diffèrent des objets et/ou des caractéristiques des objets d'autres images étant utilisées pour *l'étiquetage.*

6. Procédé d'apprentissage assisté par ordinateur d'un réseau neuronal artificiel pour la détection de caractéristiques structurelles sur des objets selon l'une quelconque des revendications 3 à 5, **caractérisé en ce qu'**après *l'étiquetage,* les images sont regroupées en groupes d'images avec des objets qui présentent peu de caractéristiques structurelles, de nombreuses caractéristiques structurelles et/ou des caractéristiques structurelles complexes.

7. Procédé d'apprentissage assisté par ordinateur d'un réseau neuronal artificiel pour la détection de caractéristiques structurelles sur des objets selon les revendications précédentes, **caractérisé en ce que**, pour l'apprentissage du réseau, les images comprenant les objets dont les caractéristiques doivent être détectées ne sont fournies qu'à certaines couches, en particulier aux couches supérieures, et seules les pondérations de ces couches sont ajustées, les couches restantes n'étant pas ajustées pour le processus d'apprentissage du réseau, en particulier leurs pondérations restant inchangées pour toutes les images.

8. Procédé d'apprentissage assisté par ordinateur d'un réseau neuronal artificiel pour la détection de caractéristiques structurelles sur des objets selon les revendications précédentes, **caractérisé en ce que**, pour le processus d'apprentissage, seules les pondérations des couches supérieures sont ajustées et les couches restantes ne sont pas ajustées pour le processus d'apprentissage, en particulier, les pondérations des couches supérieures étant ajustées pour chaque image, et pour les couches restantes, les pondérations n'étant pas ajustées pour toutes les images.

9. Procédé d'apprentissage assisté par ordinateur d'un réseau neuronal artificiel pour la détection de caractéristiques structurelles sur des objets selon les revendications précédentes, **caractérisé en ce que** les étapes de procédé individuelles sont effectuées simultanément en parallèle sur plusieurs unités de calcul, les opérations nécessaires étant réparties entre toutes les unités de calcul de manière à obtenir une utilisation optimale de la capacité de calcul.

10. Procédé d'apprentissage assisté par ordinateur d'un réseau neuronal artificiel pour la détection de caractéristiques structurelles sur des objets selon les revendications précédentes, **caractérisé en ce que** *l'étiquetage* est effectué sur une image ou un objet tridimensionnel, l'image ou l'objet tridimensionnel étant projeté sur deux dimensions et fourni au réseau neuronal pour l'apprentissage, puis étant reconverti en une image ou un objet tridimensionnel.

11. Procédé d'apprentissage assisté par ordinateur d'un réseau neuronal artificiel pour la détection de caractéristiques structurelles sur des objets selon la revendication 10, **caractérisé en ce que**, pour le traitement de la troisième dimension de l'image ou de l'objet, on utilise un réseau neuronal récurrent qui traite des séries d'images d'un objet comme faisant partie d'une séquence d'images, des informations concernant un objet étant ainsi transférées d'une perspective à d'autres perspectives du même objet.

12. Procédé d'apprentissage assisté par ordinateur d'un réseau neuronal artificiel pour la détection de caractéristiques structurelles sur des objets selon les revendications précédentes, **caractérisé en ce que** les sorties des neurones sont réintroduites dans le réseau neuronal pour l'auto-apprentissage, les erreurs de sortie étant détectées par le réseau et/ou une personne et marquées comme telles.

13. Procédé d'apprentissage assisté par ordinateur d'un réseau neuronal artificiel pour la détection de caractéristiques structurelles sur des objets selon la revendication 12, **caractérisé en ce que** la personne fournit au réseau les informations concernant la manière dont il doit détecter comment la caractéristique de l'objet doit être traitée, en particulier coupée et/ou saisie.

14. Procédé d'apprentissage assisté par ordinateur d'un réseau neuronal artificiel pour la détection de caractéristiques structurelles sur des objets selon les revendications précédentes, **caractérisé en ce que** les caractéristiques structurelles détectées des objets sont utilisées pour étalonner un laser pour un traitement de l'objet et/ou pour commander un laser afin qu'il coupe l'objet de manière ciblée.

15. Réseau neuronal artificiel comprenant une pluralité de neurones, le réseau étant configuré de manière à ce que son apprentissage soit effectué au moyen d'un procédé selon l'une des revendications 1 à 14.
